# EUROPÄISCHE PATENTSCHRIFT

(11) **EP 3 334 513 B1**
(45) Veröffentlichungstag und Bekanntmachung des Hinweises auf die Patenterteilung: **08.01.2020**
(21) Anmeldenummer: 16731798.1
(22) Anmeldetag: 14.06.2016
(51) Int. Cl.: B01D 35/31, B01D 29/90

(54) **FILTERVORRICHTUNG NEBST FILTERELEMENT**
FILTER DEVICE TOGETHER WITH A FILTER ELEMENT
DISPOSITIF FILTRANT ET ÉLÉMENT FILTRANT

(30) Priorität: 12.08.2015 DE 102015010532
(43) Veröffentlichungstag der Anmeldung: 20.06.2018
(73) Patentinhaber: Hydac Filtertechnik GmbH, 66280 Sulzbach/Saar (DE)
(72) Erfinder: FIEDLER, Sebastian, 66583 Spiesen-Elversberg (DE); SANN, Norbert, 66292 Riegelsberg (DE)
(74) Vertreter: Bartels und Partner, Patentanwälte
(86) Internationale Anmeldenummer: PCT/EP2016/000981
(87) Internationale Veröffentlichungsnummer: WO 2017/025159

(56) Entgegenhaltungen:
- EP-A1- 2 742 984
- US-A1- 2005 161 394

## Beschreibung

Die Erfindung betrifft eine Filtervorrichtung gemäß dem Oberbegriff von Patentanspruch 1. Die Erfindung betrifft ferner ein Filterelement, das, insbesondere als Austauschelement konzipiert, für eine Filtervorrichtung der vorstehend genannten Art verwendbar ist.

EP 2 742 984 A1 offenbart eine Filtervorrichtung, umfassend:
- ein Gehäuse, das einen Einlass und einen Auslass hat, wobei das Gehäuse ein Volumen definiert;
- ein Filterelement, das im Gehäuse angeordnet und zum Abtrennen von Verunreinigungen aus einer Flüssigkeit ausgelegt ist;
- ein nachgiebiges Element, das axial um einen äußeren Umfang des Filterelementes angeordnet ist, wobei das nachgiebige Element zum Absorbieren der Ausdehnung einer Flüssigkeit ausgelegt ist, wenn sie in einen Feststoff übergeht, wobei das nachgiebige Element im Verhältnis zur Ausdehnung der Flüssigkeit komprimierbar ist, wenn sie in einen Feststoff übergeht.

US 2005/0161394 A1 betrifft eine gefrierbeständige Filtervorrichtung für die Wasserfiltration, die ein Filterelement und eine kompressible Hülse aufweist. Die kompressible Hülse hat eine zylindrische Form, die durch eine innere Hülsenwand und eine äußere Hülsenwand definiert ist. Die innere Hülsenwand definiert eine innere Ausnehmung, in der das Filterelement aufgenommen ist. Die innere Hülsenwand und die äußere Hülsenwand definieren eine abgedichtete Lufttasche. Beispiele für eine solche abgedichtete Lufttasche mit eingeschlossener Luft sind ein geschlossenzelliger Schaum und eine nicht-platzende Luftpolsterfolie.

Durch die DE 10 2012 020 431A1 ist eine Filtervorrichtung mit mindestens einem von einem abzureinigenden Fluid mit vorgebbarem Fluidbetriebsdruck durchströmbaren, in einem Gehäuse aufnehmbaren Filterelement bekannt, wobei der am jeweiligen Filterelement herrschende Fluiddruck das jeweilige Filterelement, insbesondere dessen Filtermedium, schädigende Druckspitzen oder generelle Druckerhöhungen aufweisen kann, die mittels des auf das jeweilige Filterelement direkt einwirkenden Ausgleichskörpers reduzierbar und/oder glättbar sind, der bei einer Druckspitze oder Druckerhöhung eine Vergrößerung des Volumens des Fluidraums des Gehäuses ermöglicht.

Bei der bekannten Lösung nach DE 10 2012 020 431A1 ist der nachgiebige Ausgleichskörper in der Art eines Einsatztopfes in das Gehäuse der Filtervorrichtung ausgebildet und besteht bevorzugt aus einem Zell-KautschukMaterial. Mit der bekannten Lösung ist es auch möglich, die beim Gefrieren einer wässrigen Harnstofflösung, wie sie bei sog. SCR-Abgassystemen, insbesondere in der Automobiltechnik, zur Anwendung kommt, die Volumenzunahme über den Zell-Kautschuk-Ausgleichskörper zu kompensieren, um dergestalt durch die Volumenzunahme bedingt schädigende Druckeinflüsse auf das empfindliche Filterelementmaterial vermeiden zu helfen, was ansonsten zur Funktionsunfähigkeit der Filtervorrichtung führen könnte, insbesondere wenn durch das Gefrieren des Fluidmaterials das Filterelementmaterial einen Riss od. dgl. erfährt. Wegen des verhältnismäßig steifen Materialverhaltens des für den Ausgleichskörper eingesetzten Zell-Kautschuks ist die Ausgleichwirkung bei der bekannten Filtervorrichtung zwar gut geeignet, um, als Pulsationsdämpfer wirkend, schnelle Druckspitzen zu glätten oder abzumildern, ist jedoch weniger gut geeignet, die Volumenzunahme zu kompensieren, wie sie bei der Filtration wässriger Harnstofflösungen im Falle des Gefrierens auftritt.

Ausgehend von dieser Problematik stellt sich die Erfindung die Aufgabe, eine Filtervorrichtung der eingangs genannten Gattung zur Verfügung zu stellen, bei der der Ausgleichskörper einen besonders effektiven und sicheren Gefrierschutz bei einem Betrieb mit gefrierbaren Fluiden, wie einer wässrigen Harnstofflösung, zur Verfügung stellt.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Patentanspruchs 1 besteht eine wesentliche Besonderheit der Erfindung darin, dass Kanäle in Umfangsrichtung gesehen durch in Längsrichtung des Ausgleichskörpers verlaufende Stege voneinander getrennt sind, die durch Wandteile des Ausgleichskörpers gebildet sind und sich zwischen der geschlossenen zylindrischen Innenwand und der geschlossenen zylindrischen Außenwand des Ausgleichskörpers erstrecken. Dadurch ergibt sich ein besonders nachgiebiges Materialverhalten des Ausgleichskörpers.

Ferner ist erfindungsgemäß der Ausgleichskörper in Form eines zylindrischen Hohlkörpers vorgesehen, in dem zwischen innerer und äußerer Zylinderfläche eine Mehrzahl von den Luftkammern ausgebildet ist, die sich über einen Großteil der axialen Länge des Ausgleichskörpers erstrecken. Im Vergleich zu einem Ausgleichskörper, wie er bei der Lösung nach DE 10 2012 020 431A1 in Form einer Art nachgiebigen Vollkörpers eingesetzt ist, stellt der mit inneren Luftkammern versehene Ausgleichskörper mit weitaus nachgiebigerem Materialverhalten den bei Gefrieren des Fluids erforderlichen Volumenausgleich bei vergleichsweise geringer, für das Filtermedium unschädlicher Druckerhöhung zur Verfügung. Die erfindungsgemäße Filtervorrichtung gewährleistet daher einen effektiven, sicheren Gefrierschutz für das eingesetzte Filterelement.

Bei Ausführungsbeispielen, bei denen die Luftkammern derart gestaltet sind, dass das Gesamt-Luftvolumen der Luftkammern das Volumen des Werkstoffs des Ausgleichskörpers übersteigt, ergibt sich ein für den Volumenausgleich besonders günstiges Materialverhalten.

Für eine derartige Ausbildung der Luftkammern kann die Anordnung vorteilhafterweise so getroffen sein, dass die Wandstärke der Stege gleich groß ist und näherungsweise der Wandstärke der geschlossenen Innenwand und der geschlossenen Außenwand des Ausgleichskörpers entspricht.

Für ein für die Ausgleichswirkung besonders günstiges Materialverhalten des Ausgleichskörpers kann die Anordnung mit Vorteil so getroffen sein, dass die durch die Stege gebildeten Wandflächen eine von der Radialebene abweichende, vorzugsweise bei allen Stegen gleichartig gewölbte Form besitzen. Dadurch lässt sich die zwischen Innenwand und Außenwand gemessene Dicke des Ausgleichskörpers mit einer besonders geringen Druckerhöhung verringern.

Mit besonderem Vorteil kann der Ausgleichskörper aus Ethylen-Propylen-Dien-Kautschuk (EPDM) oder aus hydriertem Acryl-Nitrilbutadien-Kautschuk (HNBR) bestehen. Diese Werkstoffe eignen sich besonders für Filtervorrichtungen für aggressive Fluide, wie wässrige Harnstofflösungen. Es versteht sich, dass für andere Anwendungen auch Nitrilbutadien-Kautschuk oder andere Elastomere benutzt werden können.

Bei vorteilhaften Ausführungsbeispielen, bei denen sich das Filtermedium des in das Filtergehäuse aufnehmbar einsetzbaren Filterelements zwischen zwei Endkappen erstreckt, können die Kanäle des Ausgleichskörpers an dessen einem Ende geschlossen und am anderen Ende offen sein, wobei eine der Endkappen axial vorstehende Vorsprünge aufweist, die in die am einen Ende des Ausgleichskörpers offenen Kanäle eingreifen. Dadurch bildet diese Endkappe mit ihren Vorsprüngen ein Halteteil für den Ausgleichskörper.

Dabei kann die Anordnung mit Vorteil so getroffen sein, dass ein an der Innenseite des vorzugsweise plissierten, mehrlagigen Filtermediums anliegendes Stützrohr sowie ein fluiddurchlässiger Stützkörper, der an der Innenwand des Ausgleichskörpers anliegt, sich von einer Endkappe zur anderen Endkappe erstrecken.

Gegenstand der Erfindung ist auch ein Filterelement, insbesondere als Austauschelement konzipiert, das vorzugsweise für eine Filtervorrichtung nach einem der Ansprüche 1 bis 7 vorgesehen ist und das die Merkmale des Patentanspruchs 8 aufweist.

Nachstehend ist die Erfindung anhand von in der Zeichnung dargestellten Ausführungsbeispielen im Einzelnen erläutert.

Es zeigen:
- Fig. 1: einen Längsschnitt eines Ausführungsbeispiels der erfindungsgemäßen Filtervorrichtung, das mit vom Filtergehäuse abgenommenem Filterkopf dargestellt ist;
- Fig. 2: eine Draufsicht des Filtergehäuses des Ausführungsbeispiels, das ebenfalls mit abgenommenem Filterkopf dargestellt ist;
- Fig. 3: einen Querschnitt des Ausführungsbeispiels entsprechend der Schnittlinie III - III von Fig. 1; und
- Fig. 4: eine in perspektivischer Schrägansicht und entlang der in Fig. 1 mit III bezeichneten Schnittebene aufgeschnittene Darstellung eines zweiten Ausführungsbeispiels.

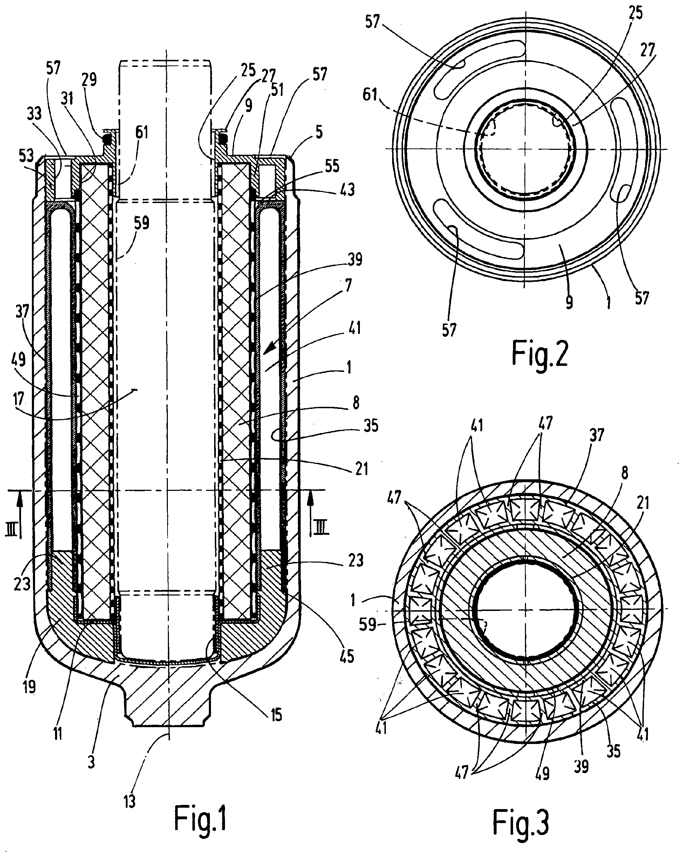

Unter Bezug auf die beigefügten Zeichnungen ist die Erfindung am Beispiel von Filtervorrichtungen beschrieben, die mit besonderem Vorteil bei SCR-Abgassystemen zur Filtration wässriger Harnstofflösungen einsetzbar sind. Das in Fig. 1 bis 3 dargestellte Ausführungsbeispiel weist ein Filtergehäuse 1 in Form eines kreiszylindrischen Topfes mit geschlossenem, gewölbten Boden 3 und offenem, oberen Ende 5 auf. Ein am oberen Ende 5 auf das Gehäuse 1 aufschraubbarer Gehäusedeckel oder -kopf, der in üblicher Weise Fluidführungen aufweist, die einen Fluideinlass für abzureinigendes Fluid und einen Fluidauslass für das Filtrat aufweist, ist in den Figuren weggelassen. Im Filtergehäuse 1 ist ein Filterelement 7 herausnehmbar aufgenommen, das ein einen Hohlzylinder bildendes Filtermedium 8 aufweist, das in der bei derartigen Filtervorrichtungen üblichen Weise plissiert und mehrlagig aufgebaut ist und sich zwischen einer in Fig.1 obenliegenden Endkappe 9 und einer unteren Endkappe 11 erstreckt. Die untere Endkappe 11 ist geschlossen, d.h. sie bildet mit einem zur Gehäuselängsachse 13 konzentrischen, topfartigen Endteil 15 den bodenseitigen Verschluss des inneren Filterhohlraums 17, der beim Filtervorgang die Filtratseite bildet. Das Endteil 15 ist von einem ein Bestandteil der Endkappe 11 bildenden Füllkörper 19 umgeben, der zusammen mit dem Endteil 15 die Einfassung für das zugewandte untere Ende des Filtermediums 8 sowie ein an dessen Innenseite anliegendes, fluiddurchlässiges Stützrohr 21 bildet. Außerdem bildet der Füllkörper 19 der Endkappe 11 einen Kranz von Vorsprüngen 23, die bei in das Gehäuse 1 eingesetztem Filterelement 7 außerhalb des Filtermediums 8 sich entlang der Gehäuseinnenseite erstrecken.

Die obere Endkappe 9 weist eine zentrale Öffnung 25 auf, die von einem Stutzen 27 umgeben ist, der die Verbindung des inneren Filterhohlraums 17 zum Fluidauslass des (nicht gezeigten) Gehäusekopfes herstellt, wobei ein O-Ring 29 die Abdichtung gegenüber dem Fluideinlass bildet. An die zentrale Öffnung 25 anschließend, bildet die obere Endkappe 9 einen ersten Ringraum 31, an den sich radial nach außen ein zweiter Ringraum 33 anschließt. Während der erste, innere Ringraum 31 die Einfassung für das Filtermedium 8 und das Stützrohr 21 bildet, dient der äußere zweite Ringraum als Abstandselement, das zusammen mit dem Kranz der Vorsprünge 23 an der untern Endkappe 11 zwischen der Außenseite des Filterelements 7 und der Innenseite des Gehäuses 1 einen Freiraum für einen Ausgleichskörper 35 zur Verfügung stellt.

Wie die Fig. 1 und 3 zeigen, hat der Ausgleichskörper 35 die Form eines zylindrischen Hohlkörpers, in dem sich zwischen äußerer Zylinderfläche und innerer Zylinderfläche, die durch eine geschlossene Außenwand 37 bzw. eine geschlossene Innenwand 39 gebildet sind, eine Mehrzahl von Luftkammern befindet. Die Luftkammern sind durch einen Kranz gleichartig geformter Kanäle 41 gebildet, die in der Schnittdarstellung von Fig. 3 der Übersichtlichkeit halber nicht sämtlich beziffert sind und sich von einem geschlossenen Ende 43, das an der radial außenliegenden Wand 45 des äußeren Ringraums 33 der oberen Endkappe 9 anliegt, in Axialrichtung zur unteren Endkappe 11 erstrecken, wobei die Kanäle 41 an dem der unteren Endkappe 11 zugeordneten Ende 45 offen sind. Die Kanäle 41 sind in der Umfangsrichtung des Ausgleichskörpers 35 voneinander jeweils durch Stege 47 voneinander getrennt, die in der Schnittdarstellung von Fig. 3 sichtbar sind, in dieser Figur der Übersichtlichkeit wegen jedoch lediglich teilweise beziffert sind. Die sich in Radialrichtung erstreckenden Stege 47 besitzen eine Wandstärke, die der Wandstärke der geschlossenen Außenwand 37 sowie der geschlossenen Innenwand 39 entspricht.

Wie Fig. 3 zeigt, sind die Stege 47 in Umfangsrichtung gemessen in solchem Abstand voneinander angeordnet, dass, über den Umfang verteilt, eine verhältnismäßig große Anzahl von Luftkammern bildende Kanäle 41 voneinander abgetrennt sind, beim gezeigten Beispiel zwanzig Kanäle 41 abgetrennt sind. Bei der gezeigten Gestaltung und bei aus einem Elastomer gebildeten Ausgleichskörper 35 besitzt dieser eine gute Nachgiebigkeit, die bei verhältnismäßig geringem, zwischen Innenwand 39 und Außenwand 37 wirkendem Druck eine wesentliche Änderung des Gesamtvolumens durch Verringerung des Volumens der Luftkammern ermöglicht. Bei der gezeigten Gestaltung ist das durch die Kanäle 41 gebildete innere Gesamt-Luftvolumen wesentlich größer als das die Wände 37 und 39 und die Stege 47 bildende Werkstoffvolumen. Bei der Ausbildung des Ausgleichskörpers 35 aus einem Elastomer, wie EPDM oder HNBR, ermöglicht der Ausgleichskörper 33 bei der gezeigten Anordnung, bei der die Innenwand 39 mit der Außenseite des Filtermediums 8 in mechanischem Kontakt ist, bei Gefrieren des Fluids einen sicheren Volumenausgleich ohne höhere, damit einhergehende Druckerhöhung.

Wie Fig. 1 zeigt, bildet die untere Endkappe 11 mit dem das Endkappenendteil 15 umgebenden Füllkörper 19 nicht nur die Einfassung für das zugewandte Ende des Filtermediums 8 des Stützrohres 21 sowie eines an der Außenseite des Filtermediums 8 anliegenden, fluiddurchlässigen Stützkörpers 49, sondern bildet auch das Halteteil für den Ausgleichskörper 35. Für seine Funktion als Halteteil greift der Füllkörper 19 der unteren Endkappe 11 mit seinen axialen Vorsprüngen 23 vom unteren Ende 45 her in die Luftkammern 41 ein.

Der an der Innenwand 39 des Ausgleichskörpers 35 anliegende Stützkörper 49 in Form einer Gitter- oder Netzstruktur erstreckt sich von der unteren Endkappe 11 in Richtung auf die obere Endkappe 9 bis zum inneren Wandteil 51 des inneren, ersten Ringraums 31 der oberen Endkappe 9. Das obere, geschlossene Ende 43 des Ausgleichskörpers 35 liegt am äußeren Wandteil 53 des äußeren, zweiten Ringraums 33 der Endkappe 9 an, wobei, wie in Fig. 1 sichtbar ist, ein Ringspalt 55 einen Durchgang vom äußeren Ringraum 33 zum Stützkörper 49 bildet, über den abzureinigendes Fluid aus dem Ringraum 33 zum Stützkörper 49 und damit zur Außenseite des Filtermediums 8 gelangt. Für den Zustrom des Unfiltrats zum äußeren Ringraum 33 sind in der Endkappe 9 Schlitzöffnungen 57 in Form von Teilkreisen ausgebildet, über die vom Fluideinlass des (nicht gezeigten) Gehäusekopfes das Unfiltrat zum äußeren Ringraum 33 gelangt. Das Filtrat gelangt vom inneren Filterhohlraum 17 her über die Öffnung 25 und den Stutzen 27 der Endkappe 9 zum Fluidauslass des (nicht gezeigten) Gehäusekopfes. Beim Ausführungsbeispiel von Fig. 1 bis 3 weisen die die Luftkammern bildenden Kanäle 41 in Umfangsrichtung gemessen etwa die gleiche Abmessung wie in Radialrichtung auf, so dass sich ein näherungsweise quadratischer Kanalquerschnitt ergibt. Es versteht sich, dass der in Umfangsrichtung gemessene Abstand der die Luftkammern 41 abteilenden Stege 47 größer oder kleiner sein könnte, so dass sich eine andere Mehreckform für den Kanalquerschnitt ergibt. In der in das Gehäuse 1 eingesetzten Funktionsposition liegt die untere Endkappe 11 des Filterelements 7 mit ihrem das Endkappenendteil 15 umgebenden Füllkörper 19 an der Innenseite des Bodens 3 des Gehäuses 1 flächig an, so dass der Füllkörper 19 das Gehäuse-Totvolumen im Bodenbereich verringert. Zur Verringerung des Totvolumens des inneren Filterhohlraums 17 ist, wie in Fig.1 mit strichpunktierter Linie angedeutet, ein zweiter Füllkörper 59 in Form eines zylindrischen Dornes eingesetzt, der beispielsweise aus Kunststoff oder Metall gebildet ist. Der Dornkörper 59 lässt sich auch zur Vermeidung des Gefrierens beheizen. Der Füllkörper 59 besitzt in dem die Öffnung 25 am Stutzen 27 der Endkappe 9 durchgreifenden Abschnitt 61 einen Durchmesser, der etwas geringer ist als der Innendurchmesser der Öffnung 25, so dass ein Fluidweg für den Austritt des Filtrats gebildet ist.

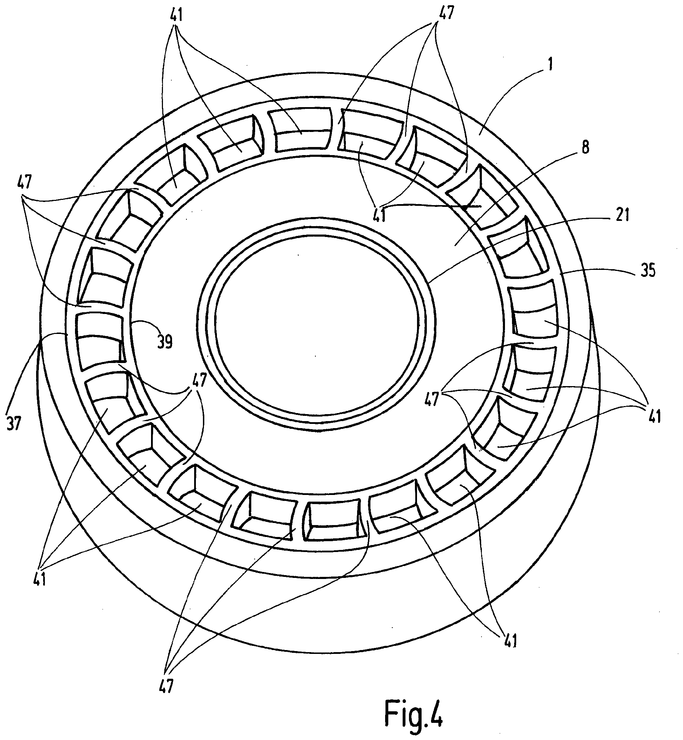

Das Ausführungsbeispiel von Fig. 4 unterscheidet sich vom ersten Beispiel lediglich durch die in dieser Figur dargestellte Form der die Luftkammern 41 abteilenden Stege 47. Während die Stege 47, wie aus Fig. 3 entnehmbar, sich jeweils in Radialebenen erstrecken, haben die Stege 47 beim Beispiel von Fig. 4 eine jeweils gleichartig gewölbte Form, die einem Teilkreisbogen entspricht. Durch die Abweichung gegenüber der ebenflächigen Form ergibt sich ein verringerter Widerstand gegen Druckkräfte, die zwischen Außenwand 37 und Innenwand 39 des Ausgleichskörpers 35 wirken. Dies führt zu einer erhöhten Nachgiebigkeit des Ausgleichskörpers 35, so dass im Gefrierfall ein das Filterelement 11 besonders schonender Volumenausgleich ermöglicht ist. Es versteht sich, dass für eine gewünschte Verminderung der Steifigkeit des Ausgleichskörpers 35 eine andere Formgebung der Stege 47 vorgesehen sein kann, die von der ebenflächigen Form abweicht.

## Patentansprüche

1. Filtervorrichtung zum Filtern von Fluid, insbesondere in Form einer wässrigen Harnstofflösung, mit einem Filtergehäuse (1) und zumindest einem darin angeordneten Filterelement (7) sowie mit einem nachgiebigen Ausgleichskörper (35), der zum Kompensieren von Druck- und/oder Volumenschwankungen des Fluids zwischen der Außenseite des Filtermediums (8) des jeweiligen Filterelements (7) und der benachbarten Innenwand des Filtergehäuses (1) angeordnet ist und auf zumindest einem Großteil der axialen Länge des Filterelements (7) eine dieses umfassende Ummantelung bildet, wobei der Ausgleichskörper (35) in Form eines zylindrischen Hohlkörpers vorgesehen ist, in dem zwischen innerer (39) und äußerer Zylinderfläche (37) eine Mehrzahl von Luftkammern (41) ausgebildet ist, die sich über einen Großteil der axialen Länge des Ausgleichskörpers (35) erstrecken und wobei die Luftkammern (41) in Form von in Axialrichtung des Ausgleichskörpers (35) verlaufenden Kanälen (41) vorgesehen sind, die in gleichem Abstand voneinander über den gesamten Umfangsbereich des Ausgleichskörpers (35) verteilt sind, **dadurch gekennzeichnet, dass** die Kanäle (41) in Umfangsrichtung gesehen durch in Längsrichtung des Ausgleichskörpers (35) verlaufende Stege (47) voneinander getrennt sind, die durch Wandteile des Ausgleichskörpers (35) gebildet sind und sich zwischen der geschlossenen zylindrischen Innenwand (39) und der geschlossenen zylindrischen Außenwand (37) des Ausgleichskörpers (35) erstrecken.

2. Filtervorrichtung nach einem der vorstehenden Ansprüche, **dadurch gekennzeichnet, dass** das Gesamt-Luftvolumen der durch die Kanäle (41) gebildeten Luftkammern das Volumen des Werkstoffs des Ausgleichskörpers (35) übersteigt.

3. Filtervorrichtung nach einem der vorstehenden Ansprüche, **dadurch gekennzeichnet, dass** die Wandstärke der Stege (47) gleich groß ist und näherungsweise der Wandstärke der geschlossenen Innenwand (39) und der geschlossenen Außenwand (37) des Ausgleichskörpers (35) entspricht.

4. Filtervorrichtung nach einem der vorstehenden Ansprüche, **dadurch gekennzeichnet, dass** die durch die Stege (47) gebildeten Wandflächen eine von der Radialebene abweichende, vorzugsweise bei allen Stegen (47) gleichartig gewölbte Form besitzen.

5. Filtervorrichtung nach einem der vorstehenden Ansprüche, **dadurch gekennzeichnet, dass** der Ausgleichskörper (35) aus EPDM oder HNBR besteht.

6. Filtervorrichtung nach einem der vorstehenden Ansprüche, **dadurch gekennzeichnet, dass** sich das Filtermedium (8) des in das Filtergehäuse (1) aufnehmbar einsetzbaren Filterelements (7) zwischen zwei Endkappen (9, 11) erstreckt, dass die Kanäle (41) des Ausgleichskörpers (35) an dessen einem Ende (43) geschlossen und am anderen Ende (45) offen sind und dass eine (11) der Endkappen (9, 11) axial vorstehende Vorsprünge (23) aufweist, die in die an einem Ende (45) des Ausgleichskörpers (35) offenen Kanäle (41) eingreifen.

7. Filtervorrichtung nach einem der vorstehenden Ansprüche, **dadurch gekennzeichnet, dass** ein an der Innenseite des vorzugsweise plissierten, mehrlagigen Filtermediums (8) anliegendes Stützrohr (21) sowie ein fluiddurchlässiger Stützkörper (49), der an der Innenwand (39) des Ausgleichskörpers (35) anliegt, sich von einer Endkappe (9) zur anderen Endkappe (11) erstrecken.

8. Filterelement, insbesondere als Austauscheinheit konzipiert, für eine Filtervorrichtung nach einem der vorstehenden Ansprüche, mit mindestens einem nachgiebigen Ausgleichskörper (35) in Form eines Hohlzylinders, der eine Mehrzahl von Luftkammern (41) zwischen seiner geschlossenen Außenwand (37) und seiner geschlossenen Innenwand (39) aufweist und auf zumindest einem Großteil der axialen Länge des Filterelements (7) eine dieses umfassende Ummantelung bildet, wobei die Luftkammern (41) in Form von in Axialrichtung des Ausgleichskörpers (35) verlaufenden Kanälen (41) vorgesehen sind, die in gleichem Abstand voneinander über den gesamten Umfangsbereich des Ausgleichskörpers (35) verteilt sind und wobei die Kanäle (41) in Umfangsrichtung gesehen durch in Längsrichtung des Ausgleichskörpers (35) verlaufende Stege (47) voneinander getrennt sind, die durch Wandteile des Ausgleichskörpers (35) gebildet sind und sich zwischen der geschlossenen zylindrischen Innenwand (39) und der geschlossenen zylindrischen Außenwand (37) des Ausgleichskörpers (35) erstrecken.

## Claims

1. Filter device for filtering fluid, particularly in the form of an aqueous urea solution, with a filter housing (1) and at least one filter element (7) arranged therein and with a flexible compensating body (35), which is arranged between the outer side of the filter medium (8) of the respective filter element (7) and the adjacent inner wall of the filter housing (1) to compensate for pressure and/or volume fluctuations in the fluid, and forms a casing on and enclosing at least a large proportion of the axial length of the filter element (7), the compensating body (35) being provided in the form of a cylindrical hollow body, in which a plurality of air chambers (41) are formed between the inner (39) and outer cylinder surface (37), said chambers extending over a large proportion of the axial length of the compensating body (35) and said air chambers (41) being provided in the form of channels (41) running in the axial direction of the compensating body (35), said channels being distributed over the entire peripheral area of the compensating body (35) equidistant from one another, **characterised in that**, when viewed in the circumferential direction, the channels (41) are separated from one another by webs (47) running in the longitudinal direction of the compensating body (35), said webs being formed by wall portions of the compensating body (35) and extending between the closed cylindrical inner wall (39) and the closed cylindrical outer wall (37) of the compensating body (35).

2. Filter device according to any one of the preceding claims, **characterised in that** the total air volume in the air chambers formed by the channels (41) exceeds the volume of the material in the compensating body (35).

3. Filter device according to any one of the preceding claims, **characterised in that** the wall thickness of the webs (47) is the same size and approximately corresponds to the wall thickness of the closed inner wall (39) and the closed outer wall (37) of the compensating body (35).

4. Filter device according to any one of the preceding claims, **characterised in that** the wall surfaces formed by the webs (47) have a curved shape which is preferably similar for all webs (47) and different from the radial plane.

5. Filter device according to any one of the preceding claims, **characterised in that** the compensating body (35) consists of EPDM or HNBR.

6. Filter device according to any one of the preceding claims, **characterised in that** the filter medium (8) in the filter element (7) that can be mounted and inserted in the filter housing (1) extends between two end caps (9, 11), **in that** the channels (41) of the compensating body (35) are closed at one (43) of its ends and open at the other end (45), and **in that** one (11) of the end caps (9, 11) comprises two axially protruding projections (23), which engage in the open channels (41) at one end (45) of the compensating body (35).

7. Filter device according to any one of the preceding claims, **characterised in that** a support tube (21) lying on the inner side of the preferably pleated, multi-layer filter medium (8) and a fluid-permeable support body (49), which lies against the inner wall (39) of the compensating body (35), extend from one end cap (9) to the other end cap (11).

8. Filter element, especially designed as a replacement unit, for a filter device according to any one of the preceding claims, with at least one flexible compensating body (35) in the form of a hollow cylinder, which comprises a plurality of air chambers (41) between its closed outer wall (37) and its closed inner wall (39) and forms a casing on and enclosing at least a large proportion of the axial length of the filter element (7), said air chambers (41) being provided in the form of channels (41) running in the axial direction of the compensating body (35), said channels being distributed over the entire peripheral area of the compensation body (35) equidistant from one another, and, when viewed in the circumferential direction, said channels (41) are separated from one another by webs (47) running in the longitudinal direction of the compensating body (35), said webs being formed by wall portions of the compensating body (35) and extending between the closed cylindrical inner wall (39) and the closed cylindrical outer wall (37) of the compensating body (35).

## Revendications

1. Dispositif de filtration pour filtrer du fluide, notamment sous la forme d'une solution aqueuse d'urée, comprenant un boîtier (1) de filtre et au moins un élément (7) de filtre, qui y est disposé, ainsi qu'une pièce (35) de compensation souple, qui, pour compenser des fluctuations de pression et/ou de volume du fluide, est disposée entre le côté extérieur du milieu (8) filtrant de l'élément (7) de filtre respectif et la paroi intérieure voisine du boîtier (1) de filtre et qui forme, sur au moins une grande partie de la longueur axiale de l'élément (7) de filtre, une enveloppe l'enveloppant, la pièce (35) de compensation étant prévue sous la forme d'une pièce creuse cylindrique, dans laquelle il est constitué, entre une surface cylindrique intérieure (39) et extérieure (37), une pluralité de chambres (41) à air, qui s'étendent sur une grande partie de la longueur axiale de la pièce (35) de compensation et dans lequel les chambres (41) à air sont prévues sous la forme de canaux (41) s'étendant dans la direction axiale de la pièce (35) de compensation et équidistants sur toute la partie de pourtour du corps (35) de compensation, **caractérisé en ce que** les canaux (41) sont, considéré dans la direction de pourtour, séparés les uns des autres par des entretoises (47), qui s'étendent dans la direction longitudinale de la pièce (35) de compensation, qui sont formées par des parties de paroi de la pièce (35) de compensation et qui s'étendent entre la paroi (39) intérieure cylindrique fermée et la paroi (37) extérieure cylindrique fermée de la pièce (35) de compensation.

2. Dispositif de filtration suivant l'une des revendications précédentes, **caractérisé en ce que** le volume d'air total des chambres à air formées par les canaux (41) dépasse le volume du matériau de la pièce (35) de compensation.

3. Dispositif de filtration suivant l'une des revendications précédentes, **caractérisé en ce que** l'épaisseur de paroi des entretoises (47) est la même et correspond à peu près à l'épaisseur de la paroi (39) intérieure fermée et de la paroi (37) extérieure fermée de la pièce (35) de compensation.

4. Dispositif de filtration suivant l'une des revendications précédentes, **caractérisé en ce que** les surfaces de paroi formées par les entretoises (47) ont une forme incurvée s'écartant du plan radial, de préférence la même pour toutes les entretoises (47).

5. Dispositif de filtration suivant l'une des revendications précédentes, **caractérisé en ce que** la pièce (35) de compensation est en EPDM ou en HNBR.

6. Dispositif de filtration suivant l'une des revendications précédentes, **caractérisé en ce que** le milieu (8) filtrant de l'élément (7) de filtre, pouvant être inséré avec possibilité de retrait dans le boîtier (1) du filtre, s'étend entre deux coiffes (9, 11) d'extrémité, **en ce que** les canaux (41) de la pièce (35) de compensation sont fermés à l'une (43) de ses extrémités et sont ouverts à l'autre extrémité (45) et **en ce que** l'une (11) des coiffes (9, 11) d'extrémité a des saillies (23) en saillie axialement, qui pénètrent dans les canaux (41) ouverts à l'une des extrémités (45) de la pièce (35) de compensation.

7. Dispositif de filtration suivant l'une des revendications précédentes, **caractérisé en ce qu'**un tube (21) d'appui, s'appliquant au côté intérieur du milieu (8) filtrant, a plusieurs couches, de préférence plissées, ainsi qu'une pièce (49) d'appui perméable au fluide, qui s'applique à la paroi (39) intérieure de la pièce (35) de compensation, s'étendent d'une coiffe (9) d'extrémité à l'autre coiffe (11) d'extrémité.

8. Elément de filtre, conçu notamment comme unité remplaçable, pour un dispositif de filtration suivant l'une des revendications précédentes, comprenant au moins une pièce (35) de compensation souple, sous la forme d'un cylindre creux, qui a une pluralité de chambres (41) à air entre sa paroi (37) extérieure fermée et sa paroi (39) intérieure fermée et qui forme, sur au moins une grande partie de la longueur axiale de l'élément (7) de filtre, une enveloppe l'enveloppant, les chambres (41) à air étant prévues sous la forme de canaux (41), qui s'étendent dans la direction axiale de la pièce (35) de compensation et qui sont équidistants les uns des autres sur toute la partie de pourtour de la pièce (35) de compensation et dans lequel les canaux sont, considéré dans la direction du pourtour, séparés les uns des autres par des entretoises (47), qui s'étendent dans la direction longitudinale de la pièce (35) de compensation, qui sont formées par des parties de paroi de la pièce (35) de compensation et qui s'étendent entre la paroi (39) intérieure cylindrique fermée et la paroi (47) extérieure cylindrique fermée de la pièce (35) de compensation.
